# EUROPEAN PATENT SPECIFICATION

(11) **EP 3 907 422 B1**
(45) Date of publication and mention of the grant of the patent: **28.12.2022**
(21) Application number: 21000124.4
(22) Date of filing: 04.05.2021
(51) Int. Cl.: F16L 27/04

(54) **TUBE CONNECTION WITH SPHERICAL FLARED FITTINGS**
KUGELFÖRMIGE ROHRVERBINDUNG
CONNECTEUR SPHERIQUE

(30) Priority: 04.05.2020 ES 202030779 U
(43) Date of publication of application: 10.11.2021
(73) Proprietor: Noksel España, S.A., 28007 Madrid (ES)
(72) Inventor: Carretero, Manuel Cortés, 30800 Lorca (Murcia) (ES)
(74) Representative: Díaz de Bustamante y Terminel, Isidro

(56) References cited:
- DE-U1- 29 708 669
- FR-A1- 2 279 931
- NL-A- 7 801 531

## Description

### OBJECT OF THE INVENTION

The invention, as exposed on the wording of the present specification, refers to a tube union with spherical flaring which imparts to the function it is intended to, advantages and characteristics, which will be described in detail below, which are an improvement of the current state of the art.

More specifically, the object of the invention is focused on an improved type of tube union with spherical flaring, in particular tubes applicable to form pipe ducts subjected to cycles of charging and discharging of water, which is distinguished by the fact of incorporating an internal thermal insulation sleeve and an elastic gasket, achieving prevent the uncoated inner surface of the female part of the union from coming into contact with air and, consequently, stopping the eventual oxidation process in said area, therefore, advantageously, it only requires external welding.

### APPLICATION FIELD OF THE INVENTION

The application field of the present invention is framed within the sector of the industry dedicated to the manufacture of tubes, in particular tubes or pipes for the formation of water ducts, focusing particularly on the field of developing union systems between tubes.

### BACKGROUND OF THE INVENTION

Spherical flared unions are known, that is, those that allow the coupling of respective tube segments whose ends are flared in a spherical shape, one being of a larger diameter, called female, and the other of a smaller diameter, called male, which fits into the female end, allowing, thanks to said spherical configuration of the two ends fitted together, that the union allows a certain degree of angulation between both tubes. Such devices are for example disclosed in DE 297 08 669 U1 or NL 7 801 531 A.

The problem is that, when said tubes are intended to the formation of water conduction pipes and are made of steel, the effect of this in contact with the air that can be filtered in the area of union between both tubes, where they internally are not coated, it causes the usual oxidation effect which, if not avoided by internal welding, can lead to an undesirable deterioration of the material and, consequently, of the pipe. However, especially in smaller size tubes, it is not always possible to carry out such internal welds.

The objective of the present invention is, therefore, to provide an improved union system in said type of tubes with spherical flaring that provides the necessary tightness and avoids said oxide formation, among other advantages.

On the other hand, and as a reference to the current state of the art, it should be noted that, the existence of any other tube union with spherical flaring is unknown, at least on the part of the applicant, which presents technical and structural characteristics that are the same or similar to those presented by the union claimed herein.

### EXPLANATION OF THE INVENTION

The tube union with spherical flaring that the invention proposes allows to satisfactorily achieve the aforementioned objectives, being the characterizing details that make it possible and that distinguish it conveniently included in the final claims that accompany the present description.

What the invention proposes, as previously pointed out, is a tube union with spherical flaring, in particular steel tubes with an outer coating applicable to form pipe ducts subjected to cycles of charging and discharging of water, which advantageously incorporates an inner thermal insulation sleeve and an elastic gasket, achieving with this development that the inner uncoated surface of the female does not come into contact with the air, and thus stopping the oxidation process in pipes subjected to cycles of charging and discharging of water, in which the uncoated area could come into contact with the air circulation.

More specifically, the union incorporates a sleeve that closes the vaulted interior gap that defines the spherical shape of overlap between the respective male and female flared ends of the union, and a gasket made of rubber or a similar elastic material that is positioned at one end of the sleeve, between this and the inner surface of the female part, closing the space existing between said inner surface of the female part and the edge of the male part, in such a way as to provide a watertight isolation area at said point allowing that the filed welding only has to be carried out only from the outside.

In addition, said elastic gasket defines a barrier or tightness area in the overlapping section between the male and female part of the union, since it has a conical or comb-shaped section configuration, the teeth of which are oriented towards the interior of the isolation space, favouring the passage of water, in the first filling cycle, but hindering its exit.

The design of the sleeve, as well as of the gasket and the elastic material used in the manufacture of said gasket allow that only is required to weld from the outside, without causing damage to both the inner coating and in the gasket, not having to enter inside the tubes.

Specifically, the operation of the union to achieve the tightness is as follows:
- During the first charging cycle of the pipe, the water enters the vaulted space behind the gasket, between the sleeve and the spherically flared ends (tightness area), displacing part of the air found in that area and replacing it by water.
- During the first discharge cycle of the pipe, when the internal pressure has dropped, the compressed residual air behind the gasket causes its displacement, which improves the sealing between the edge of the male part and the inner surface of the female part.
- At the end of the first charging and discharging cycle, the gasket has made a displacement due to pressure changes that makes it adapt to the space between the sleeve, the inner surface of the female part and the edge of the male part.
- Its conical shape ensures that the gasket does not move outwards. The water contained behind the gasket is retained in that area, and the air in that same area will maintain the tightness of the system.

With this, the new union, in addition to maintaining all the advantages of the spherical flare system, provides new and important advantages that are listed below:
- It allows perform only external welding.
- It provides faster assembly and eliminates the risk of damaging the inner coating.
- It provides material savings and complete elimination of all work for inner coating the unions to be carried out on site.
- It provides great ease in assembly, and high flexibility in pipe layouts, by allowing angular rotation of the union.
- It provides total tightness of the uncoated area of the inner female.

### DESCRIPTION OF THE DRAWINGS

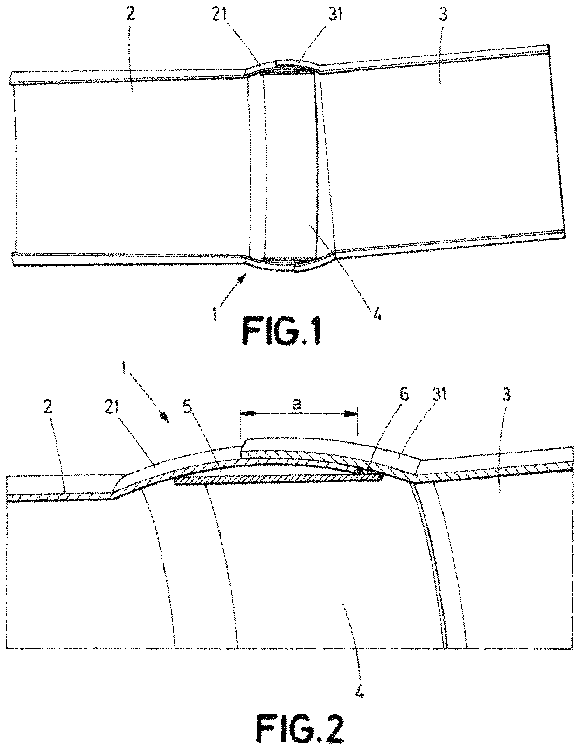

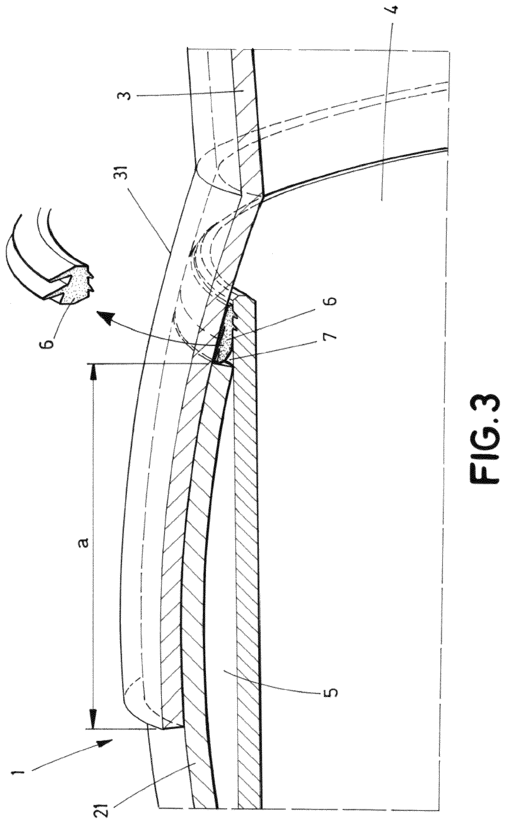

In order to complete the description being made and to ease a better understanding of the characteristics of the invention, we attach to the present specification, making part of the same, a set of layouts where, with an illustrative non limitative character, the following has been represented:
Figure number 1.- Shows a sectional view of an exemplar embodiment of the tube union with spherical flaring object of the invention, with the main parts and elements it comprises being appreciated.
Figure number 2.- Shows a sectional view of an enlarged portion of the tube union, according to the invention, shown in figure 1, with the parts and elements it comprises, as well as the configuration and arrangement thereof being in more detail appreciated.

And figure number 3.- Shows a sectional view of an even more enlarged portion of the tube union of the invention, according to the example shown in figures 1 and 2, with the arrangement and configuration of the elastic gasket said union presents being especially appreciated.

### PREFERRED EMBODIMENT OF THE INVENTION

In light of the mentioned figures, and according to the numbering taken on them, can be seen in them an example of non-limiting realization of the tube union with spherical flaring of the invention, which comprises what is indicated and described in detail below.

Thus, as can be seen in said figures, the union (1) in question, applicable particularly to form pipe ducts subjected to cycles of charging and discharging of water, is of the type that comprises the coupling of the respective male end (21) of a first tube (2) and female end (31) of a second tube (3), preferably steel tubes (2, 3) with an outer coating, where such ends (21, 31) are spherically flared by snugly fitting the male (21) into the female (31) so that they are superimposed in a section (a), with the possibility of presenting angular rotation between both tubes (2, 3).

And, from said already known configuration, the union (1) is distinguished by comprising:
- a cylindrical sleeve (4) incorporated therein and dimensioned, in terms of diameter and length, in such a way that it closes the vaulted interior gap (5) that defines the spherical shape of both male (21) and female (31) ends, encompassing, at least, the section (a) of overlap between them,
- and an elastic gasket (6), made of rubber or a similar elastic material, which is located at one end of the sleeve (4), outwardly thereof, being fitted between the outer surface of the sleeve (4) and the inner surface of the female end (31) of the union (1), closing the space (7) existing between said inner surface of the female end (31) and the edge of the male end (21).

Furthermore, in the preferred embodiment of the invention, the elastic gasket (6) has a conical or inverted comb-shaped section configuration, that is, wider below than above, and optionally in the form of a two-teethed comb, its upper part or narrower teeth arranged so that they are oriented towards the interior of the space (7) existing behind the gasket (6) between the inner surface of the female end (31) and the edge of the male end (21), favouring the passage of water, but hindering its exit.

Having sufficiently described the nature of the present invention, as well as a way of putting it into practice, it is not considered necessary to make a more extensive explanation in order that any expert in this area will understand its scope and the advantages that can be derived from it, making known that, within the scope of the claims it could be put into practice in other embodiments differing in detail from that indicated by way of example, and which will obtain the same degree of protection, provided that its fundamental principle is not altered, changed or modified.

## Claims

1. TUBE UNION WITH SPHERICAL FLARING which, particularly applicable to form pipe ducts subjected to cycles of charging and discharging of water, and comprising the coupling of the respective male end (21) of a first tube (2) and female end (31) of a second tube (3), where such ends (21, 31) are spherically flared by fitting the male (21) tightly into the female (31) so that they are superimposed in a section (a), further comprising:
- a cylindrical sleeve (4) incorporated therein and dimensioned, in terms of diameter and length, in such a way that it closes the vaulted interior gap (5) that defines the spherical shape of both male (21) and female (31) ends, encompassing, at least, the section (a) of overlap between them,
- **characterized in that** it comprises an elastic gasket (6), made of rubber or a similar elastic material, which is located at one end of the sleeve (4), outwardly thereof, being fitted between the outer surface of the sleeve (4) and the inner surface of the female end (31) of the union (1), closing the space (7) existing between said inner surface of the female end (31) and the edge of the male end (21).

2. TUBE UNION WITH SPHERICAL FLARING, according to claim 1, **characterized in that** the elastic gasket (6) has a wider section configuration at the bottom than at the top, its narrower upper part arranged so that it is oriented towards the interior of the space (7) existing behind the gasket (6) between the inner surface of the female end (31) and the edge of the male end (21), favouring the passage of water, but hindering its exit.

3. TUBE UNION WITH SPHERICAL FLARING, according to claim 1, **characterized in that** the gasket (6) is in the form of a comb with two teeth.

## Patentansprüche

1. ROHRVERBINDUNG MIT SPHÄRISCHER AUSWEITUNG, das insbesondere anwendbar ist, um Rohrkanäle zu bilden, die Zyklen des Beladens und Entladens von Wasser ausgesetzt sind, und das die Kopplung des jeweiligen männlichen Endes (21) eines ersten Rohrs (2) und des weiblichen Endes (31) eines zweiten Rohrs (3) umfasst, wobei solche Enden (21, 31) sphärisch aufgeweitet sind, indem das männliche Ende (21) fest in das weibliche Ende (31) eingepasst wird, so dass sie in einem Abschnitt (a) überlagert sind, ist ferner **dadurch gekennzeichnet, dass** es umfasst:
- eine darin eingebaute zylindrische Hülse (4), die im Hinblick auf Durchmesser und Länge so dimensioniert ist, dass sie der gewölbten innerer Lücke (5) schließt, die die sphärische Form sowohl des männlichen (21) als auch des weiblichen (31) Endes definiert, wobei sie zumindest den Abschnitt (a) der Überlagerung zwischen ihnen umfasst,
- und eine elastische Dichtung (6) aus Gummi oder einem ähnlichen elastischen Material, die an einem Ende der Hülse (4) außerhalb derselben angeordnet ist und zwischen der Außenfläche der Hülse (4) und der Innenfläche des weiblichen Endes (31) der Verbindung (1) angeordnet ist und den Raum (7) verschließt, der zwischen der Innenfläche des weiblichen Endes (31) und dem Rand des männlichen Endes (21) vorhanden ist.

2. ROHRVERBINDUNG MIT SPHÄRISCHER AUSWEITUNG nach Anspruch 1, **dadurch gekennzeichnet, dass** die elastische Dichtung (6) eine Konfiguration mit einem breiteren Querschnitt an der Unterseite als an der Oberseite aufweist, wobei sie ihren schmaleren oberen Teil so angeordnet ist, dass sie in Richtung des Inneren des Raums (7) ausgerichtet ist, der hinter der Dichtung (6) zwischen der Innenfläche des weiblichen Endes (31) und dem Rand des männlichen Endes (21) vorhanden ist, was den Durchgang von Wasser begünstigt, aber ihren Austritt behindert.

3. ROHRVERBINDUNG MIT SPHÄRISCHER AUSWEITUNG, nach Anspruch 1, **dadurch gekennzeichnet, dass** die Dichtung (6) die Form eines Kamms mit zwei Zähnen hat.

## Revendications

1. RACCORD DE TUBES AVEC ÉVASEMENT SPHÉRIQUE qui, particulièrement applicable pour former des conduits de tuyau soumis à des cycles de chargement et de déchargement d'eau, et comprenant le couplage de l'extrémité mâle (21) d'un premier tube (2) et de l'extrémité femelle (31) d'un second tube (3) respectives, où ces extrémités (21, 31) sont évasées de manière sphérique en ajustant l'extrémité mâle (21) de manière serrée dans l'extrémité femelle (31) de sorte qu'elles sont superposées dans une section (a), est **caractérisé en ce qu'**il comprend en outre:
- un manchon cylindrique (4) intégré dans celui-ci et dimensionné, en diamètre et en longueur, de manière à fermer l'espace intérieur voûté (5) qui définit la forme sphérique des tous les deux extrémités mâle (21) et femelle (31), englobant au moins la section (a) de superposition entre elles,
- et un joint élastique (6), fait de caoutchouc ou d'un matériau élastique similaire, qui est situé à une extrémité du manchon (4), vers l'extérieur de celui-ci, étant ajusté entre la surface extérieure du manchon (4) et la surface intérieure de l'extrémité femelle (31) du raccord (1), fermant l'espace (7) existant entre ladite surface intérieure de l'extrémité femelle (31) et le bord de l'extrémité mâle (21).

2. RACCORD DE TUBES AVEC ÉVASEMENT SPHÉRIQUE, selon la revendication 1, **caractérisé en ce que** le joint élastique (6) a une configuration de section plus large au fond qu'au sommet, étant sa partie supérieure plus étroite agencée de sorte qu'elle est orientée vers l'intérieur de l'espace (7) existant derrière le joint (6) entre la surface intérieure de l'extrémité femelle (31) et le bord de l'extrémité mâle (21), favorisant le passage de l'eau, mais empêchant sa sortie.

3. RACCORD DE TUBES AVEC ÉVASEMENT SPHÉRIQUE, selon la revendication 1, **caractérisé en ce que** le joint (6) est sous la forme d'un peigne avec deux dents.
